# EUROPEAN PATENT SPECIFICATION

(11) **EP 3 194 680 B1**
(45) Date of publication and mention of the grant of the patent: **29.12.2021**
(21) Application number: 15766393.1
(22) Date of filing: 15.09.2015
(51) Int. Cl.: E04C 2/288, E04C 2/20

(54) **A BUILDING WALL AND ITS METHOD FOR MANUFACTURE**
GEBÄUDEWAND UND VERFAHREN ZU IHRER HERSTELLUNG
PAROI DE CONSTRUCTION ET SON PROCÉDÉ DE FABRICATION

(30) Priority: 15.09.2014 DK 201470567
(43) Date of publication of application: 26.07.2017
(73) Proprietor: Thörngren, Pontus Petter, 8700 Horsens (DK)
(72) Inventor: Thörngren, Pontus Petter, 8700 Horsens (DK)
(74) Representative: AWA Denmark A/S
(86) International application number: PCT/DK2015/050273
(87) International publication number: WO 2016/041559

(56) References cited:
- EP-A1- 0 691 441
- EP-A1- 0 789 112
- WO-A2-2007/147178
- DE-A1- 10 341 761
- FR-A1- 2 330 822
- GB-A- 2 268 199
- GB-A- 2 479 649
- None

## Description

The present invention relates to a method for manufacture of a fire-proof and insulating prefabricated building wall comprising a wall core of an expanded, foamed plastic material, such as EPS (expanded polystyrene), with an integrated reinforcement structure and a coating of a cementitious material.

In the present specification the term "building wall" is used as meaning interior as well as exterior building walls, floors and roofs.

Using an expanded, foamed plastic material, such as EPS, as an insulating wall component is well known in the art of building construction.

The term "insulating concrete form" or "ICF" is used for a widely applied *in situ* technology for manufacturing building walls. A system of formwork for reinforced concrete (the ICF) is made with rigid blocks of EPS that stay in place as a permanent interior and exterior substrate for walls, floors, and roofs. The forms are interlocking modular units that are dry-stacked without mortar to form a hollow core space into which concrete is poured. The units lock together and create a form enclosing the hollow core space in which an enforcement structure usually comprising reinforcing steel bars is positioned before injecting the concrete. The reinforcement structure, concrete core and EPS blocks form a wall core, which are coated on its major surfaces with plaster.

Plumbing and electrical conduit can be placed inside the ICF forms, though settling problems may cause them to break, creating costly repairs. For this reason, plumbing and conduit are usually embedded directly into the foam before the wall coverings are applied. A hot knife is commonly used to create openings in the foam to lay piping and cabling, while ICFs made from other materials are typically cut or routed with simple carpentry tools. As ICF building walls are manufactured *in situ,* manufacture is sensitive to labour costs, and quality of the construction may also be an issue.

WO 2004/042163 A2 discloses a bulding wall module with a polystyrene core plate with outer layers of welded wire mesh encased in concrete, potentially comprising steel wire trusses that extend through the core plate. The core plate is constructed of several premanufactured polystyrene blocks that are positioned to abut each other after having been cut into shape.

AU 4573696 A discloses a wall panel in which reinforcing, U-shaped members are placed in a mould and held in position. Thereafter, polystyrene beads are placed under pressure with the use of steam to cause them to expand and form the wall panel. GB 2 268 199 A discloses a reinforced and prefabricated panel comprising two fibre cement layers and a foamed intermediate layer sandwiched there between , wherein the intermediate layer contains reinforcing structures.

On this background it is an object of the present invention to provide a method for manufacture of a fire-proof and insulating building wall, which provides a wider range of possibilities for the manufacture and features of the wall.

Thus, the present invention provides a method for manufacture of a fire-proof and insulating prefabricated building wall, comprising the steps of
positioning an interior load-bearing reinforcement structure with a number of reinforcing members into an expansion mould with a mould wall comprising interior mould surfaces enclosing a plate shaped volume,
blowing beads of an insulating expandable plastic material into the expansion mould,
expanding the beads in the expansion mould and allowing them to melt together to form a foamed core plate of a plate shape corresponding to the plate shape of said plate shaped volume, said plate shape of the core plate comprising plate surfaces including two major plate surfaces, the beads ultimately expanding to encase the reinforcement structure so that the reinforcement structure extends through and is embedded within the core plate with substantially all surfaces of the reinforcement structure that are positioned within said plate surfaces of the core plate being in contact with the core plate, the reinforcement structure and the foamed core plate thereby together forming a load-bearing, insulating wall core, which assumes the general plate shape of the core plate,
positioning of the wall core in a formwork mould with a mould wall encasing the wall core, the mould wall comprising interior mould surfaces forming a plate shaped volume, at least one of the major surfaces of the wall core being positioned at a distance from the mould wall,
injecting a fire-proof cementitious material into the formwork mould and allowing it to extend at least between the mould wall and said one major surface of the wall core, and
allowing the cementitious material to at least partly cure, the cementitious material adhering to said one major surface to thereby provide coating of the one said major surface of the wall core with the cementitious material to form a coating having an outer surface forming a first major surface of the building wall.

A complete building wall according to the invention can thus be manufactured in a factory, which alleviates the drawbacks associated with building walls manufactured *in situ.* The building wall resulting from the method according to the invention can be removed from the formwork mould and transported to the building site where it can be readily lifted into position, e.g. using a crane. Thus a building with a fire-proof, insulating, load-bearing prefabricated building wall comprising a wall core with an insulating core can be manufactured. Several building walls that may be in the form of building wall modules can be attached to each other using connecting or anchoring devices that may also be integrated in the plate-shaped building wall and extend outside the wall from the surfaces of the wall.

The building wall can also be used as horizontal construction walls, i.e. roofing or flooring modules, in the building that similarly may be connected to each other and the outer walls of the building. The building wall according to the invention may be used as outer walls forming part of the building's weather screen as well as interior walls.

The coating layer is preferably able to carry itself, but is otherwise not load-bearing. The enforcing members usually are reinforcing bars or beams, preferably of steel, that may carry the load of the wall itself as well as other building parts. They may provide flexural strength sufficient to allow use of the building wall in flooring and roofing. The bars preferably have a cross-sectional profile that allows the bars to function as load-bearing columns in a static system of the building, such as a U-beam, an H-beam or an I-beam.

The reinforcement members may also comprise reinforcing steel trusses and/or steel wiring.

The major surfaces of the building wall may be painted and/or wall covering or panels may be attached to the outer surface of the building wall at the factory or at the building site.

Expansion of the plastic material can be accomplished using steam provided from a steam generator at the manufacturing site.

The cementitious fire-proof material may comprise one or more of plaster and light-weight concrete. The expanded plastic material preferably comprises at least 90 % of a polymer and optionally one or more additives or fillers. Preferably steel bars are provided to provide load-bearing properties sufficient to allow the building wall to carry both its own weight and the weight of building elements. They preferably have a cross-sectional profile, such as a U-profile or an I-profile, that allows the bars to function as load-bearing columns in a static system of a building in which the wall is positioned.

The term building wall also comprises walls used in a roof or a floor of a building.

The wall core is preferably shaped substantially as a parallelepiped that is positioned with its major surfaces substantially perpendicular and preferably substantially horizontally during the injecting step. Similarly, the building wall is preferably shaped as a parallelepiped. Accordingly, the interior volumes of the expansion mould and the formwork mould are preferably each shaped as a parallelepiped. A lid may be positioned on top of the moulds to form the mould wall of the upper minor surfaces of the building wall.

Coating is preferably carried out on both major surfaces of the plate-shaped wall core, more preferred also on some or all minor surfaces of the wall core. A separately provided adhesive can be applied to the surfaces of the wall core before the injection step to ensure sufficient adhesion between the wall core and the coating. If all surfaces of the wall core are coated, there is less need for such an adhesive since the coating completely encases the wall core and thus is inherently attached in position to abutting the surfaces of the wall core.

Coating of the bottom minor surface of the wall core may be achieved by positioning one or more spacer blocks beneath the wall core to space the wall core from a bottom mould surface of the formwork mould. The spacer blocks may comprise concrete, such as light-weight concrete, and are preferably moulded into the coating during the injection step.

Before the injection step the formwork mould can be filled with an insulating filler material, such as loose insulating, pellatised ceramic or perlit beads, e.g. LECA beads, around the wall core between which the cementitious material is being distributed during the injection step so that the beads are integrated into the coating. The coating is preferably fire-proof.

Before the injection step, and potentially before a bead filling step, a wire mesh, such as a steel wire mesh, can be positioned in the formwork between the wall core and the mould wall, preferably attached to the reinforcing members of the wall core. Usually the wire mesh positioned at the major surfaces of the wall core, and the wire mesh is positioned to be substantially co-planar with the major surfaces. The wire mesh is then moulded into the coating during the injection step, which provides improved structural integrity and flexural strength of the coating.

A wire mesh, such as an acrylic wire mesh, may also be positioned close to the mould wall surface at each of the major surfaces of the wall core before the injection step so as to be integrated into the coating during the injection step. This provides stronger outer surfaces of the building wall.

The cementitious material is preferably pumped into the formwork mould from a lower point of the mould, preferably from the bottom of the mould to allow it to disperse within the mould. It is preferred that the cementitious material is pumped into the formwork mould from a point beneath the mould. The formwork mould is closed, and preferably a vacuum is applied to the space to be filled with cementitious material, which is usually in the form of cementitious pasta, which improves dispersing of the material.

The method according to the invention is especially suitable for manufacture of several building walls of similar configuration. In this case the method comprises the further step of repeating the method according to the invention to manufacture a further building wall using the same equipment in the same manner. The invention is thus suited for manufacture of building walls for standard houses where several building walls of similar configuration can advantageously be mass produced.

An embodiment of the method according to the invention comprises previous to the blowing step the further step of positioning piping, channels and/or cabling in the expansion mould to fit to desired positions in the resultant building wall, the piping, channels and/or cabling being embedded in the wall core during the expansion step. At the factory the piping, channels and/or cabling can thus be positioned in exact locations in the building wall at the factory, and cutting in the building wall at the building site can be completely avoided. Since the foamed plastic is very elastic, settling problems are not an issue. The plastic material within the surfaces of the wall core are typically substantially everywhere in contact with outer surfaces of the piping, channels and cabling since the plastic material is expanded to enclose these. The piping, channels and/or cabling may at respective ends project out of the wall core and the building wall to allow for connection.

Another embodiment further comprises previous to the blowing step the further step of positioning of a frame within the expansion mould, the frame extending between two parts of the mould wall, a frame volume enclosed within the frame being kept free of the plastic material during the blowing and expansion steps, said frame volume forming a door or window aperture in the wall core and the resultant building wall. The frame preferably comprises four side surfaces that function as formwork for the side surfaces of the aperture. Hereby, in a cheap and easy manner window and door apertures can also be included in the wall without the need to cut out apertures in the wall core after manufacture. Cutting out space for piping, window apertures and the like is generally imprecise and may produce areas of lowered insulation abilities of the resultant building wall.

In another embodiment the expansion mould on a mould wall surface facing said one major surface of the wall core comprises at least one longitudinally extending projection that extends coplanarly with the mould wall surface so that the expanded wall core on said major surface thereby comprises an associated longitudinally extended groove shaped by the longitudinally extending projection, and previous to the injecting step further comprising the step of
positioning at least one solar heating liquid pipe in the groove so that after the injecting step in the resultant building wall the liquid pipe extends between said one of the major surfaces of the wall core and the coating, a channel for the liquid pipe being provided by oppositely disposed grooves in the wall core and the coating, respectively. Hereby at the factory a solar heating liquid pipe can be readily included in the building wall close to the major surfaces of the building wall and at the outer side of the insulation. The liquid pipe is thus able to collect and store heat energy from the coating. The heat may be produced from the sun at an outer major surface of the building wall and so that the wall effectively functions as a solar heat collector, the liquid pipes forming part of a solar collector system with re-circulating liquid. Alternatively or additionally, the building wall is able to cool down the circulating liquid during the night to provide cooling during daytime. In a development of the embodiment in which the building wall comprises liquid pipes, solar cell panels are positioned on or integrated into the outer surface of the building wall, i.e. on the outside of one of the major surfaces of the building wall. In a conventional manner the solar cell panels produce power. As is well-known during production of power from solar cells a relatively large amount of heat is produced, which lowers the amount of power produced by the solar cells. Thus, it is preferred that the liquid pipes are positioned behind the solar cell panels to provide cooling of a back side of the panels using circulation of the liquid within the piping. Preferably the channel and liquid pipe weave back and forth across the surface to provide a larger heating area. Inlet and outlet of the liquid pipe can be provided in the resultant building wall for connection with a solar heating system. When the liquid circulates outside the building wall, it is cooled for instance in the ground or in a solar heating system, e.g. for heating water for domestic use. Preferably the piping includes flexible tubes that can easily be positioned in the grooves before the injection step. The flexible tubes can be attached in different places to the wall core using temporary fastening means such as metal clips or the like that can be introduced into the wall core and be integrated into the coating. It is noted that in the embodiment with solar heating piping the piping can alternatively be positioned within the coating or on an outer surface of the coating. The latter may be optimal for cooling solar cell panels. However, the described embodiment in which the piping is positioned between the wall core and the coating provides an advantageous manner to include the piping in the building wall, which can be done at the factory. The building wall may comprise one or more solar heating pipes. The pipes may also be provided on the major surface of the building wall facing the inside of the building to be connected to a cooling or heating liquid source to heat or cool the building interior. Heat collected from the outside wall may be distributed at the inside wall.

In another embodiment the injection step also comprises similar coating of the other of said major surfaces of the wall core with the cementitious, fire-proof material forming an outer surface with a second outer surface of the building wall. One or both surfaces are preferably substantially fully covered by the coating to make the resultant wall fire-proof when installed in a building. All minor surfaces of the wall core (four minor surfaces in the case of a parallelepiped building wall) are also preferably coated, which provides a stable wall cassette, which is fire-proof on all sides and surfaces. However, if the building in which the building wall is positioned allows it, not all surfaces, especially one or more of the minor surfaces, need be coated.

In another embodiment the expanded plastic material essentially consists of polystyrene or polyurethane. It may also comprise additives or fillers such as cellulose and starch. Preferably more than 80 percent, more preferred more than 90, more preferred more than 95, more preferred more than 98 of the solid matter of the core plate is polystyrene or polyurethane. Thermal conductivity measured according to EN 12667 may range from 0.032 to 0.038 W/(m·K) depending on the density of the core plate. The density of the core plate may be 10 to 50 kg/m3, preferably 20 to 30 kg/m3. Adding fillers (graphites, aluminium, or carbons) may allow the thermal conductivity of the core plate to reach around 0.030-0.034 W/(m·K).

In another embodiment the core plate extends between the reinforcement structure and the coating so that the core plate at substantially all positions distances the coating from the reinforcement structure with at least 5 mm, preferably at least 10 mm, more preferred at least 15 mm. This provides improved insulating properties of the wall.

Another aspect of the invention provides a fire-proof and insulating prefabricated building wall manufactured according to the method of any one of the above embodiments. Such building walls may be characterized in that the core plate extends to substantially in all positions within the boundaries of the core plate be in contact with the reinforcement structure. This is achieved since the plastic material during expansion completely surrounds and encloses the reinforcement structure. If channels, cabling or piping is included in the wall core as explained above the core plate may similarly extend to substantially in all positions within the boundaries of the core plate be in contact with the channels, cabling or piping.

According to a further aspect of the invention the above described fire-proof and insulating prefabricated building wall further comprises
a solar heating liquid pipe being positioned in a channel extending between the wall core and the coating.

Again, such building walls may be characterized in that the core plate extends to substantially in all positions within the boundaries of the core plate be in contact with the reinforcement structure. This is achieved since the plastic material during expansion completely surrounds and encloses the reinforcement structure. If channels, cabling or piping is included in the wall core as explained above the core plate may similarly extend to substantially in all positions within the boundaries of the core plate be in contact with the channels, cabling or piping. The solar heating piping may be included in the wall in the manner as described in the above.

In an embodiment of this aspect the reinforcing members comprise bars extending longitudinally from one end to another in a direction extending substantially in a plane of the plate-shaped building wall with load-bearing properties sufficient to allow the building wall to carry both its own weight and a substantial part of the load of a roof construction above the building walls, the bars having a cross-sectional profile that allows the bars to function as load-bearing columns in a static system of the building.

In another aspect the invention comprises a building including one or more building walls according to the invention and/or manufactured according to the invention. Preferably the building comprises at least two such walls, more preferred at least four such walls that form the four outer walls of the building. In such a building the reinforcing members may be configured and dimensioned to carry substantially all loads in a downwards direction, i.e. so that further reinforcement structures are substantially not necessary at the outer surfaces of the building. In effect the reinforcing members thus are the only load-carrying parts of or at the building's outer walls.

The invention will be described in further detail in the following with reference to the examples of embodiments shown in the drawings in which
Fig. 1 shows parts of an expansion mould used in an embodiment of the method according to the invention and a reinforcement structure of an embodiment of a building wall according to the invention.
Fig. 2 shows the expansion mould of Fig. 1 with the reinforcement structure inserted.
Fig. 3 shows the expansion mould of Fig. 1 in a closed position.
Fig. 4 shows a wall core of the building wall being extracted from the expansion mould.
Fig. 5 shows parts of a formwork mould used in the method.
Fig. 6 shows the wall core positioned in the formwork mould of Fig. 5.
Fig. 7 shows an exploded view of the building wall with some parts removed.
Fig. 8 shows a perspective view of the building wall of Fig. 7 with some parts removed.
Fig. 9 shows a perspective view of the building wall of Fig. 7.
Fig. 10 shows a schematic side view of the building wall of Fig. 7 taken along the line X-X of Fig. 11.
Fig. 11 shows a schematic sectional view of a detail of the building wall of Fig. 7 taken along the line II-II of Fig. 10.

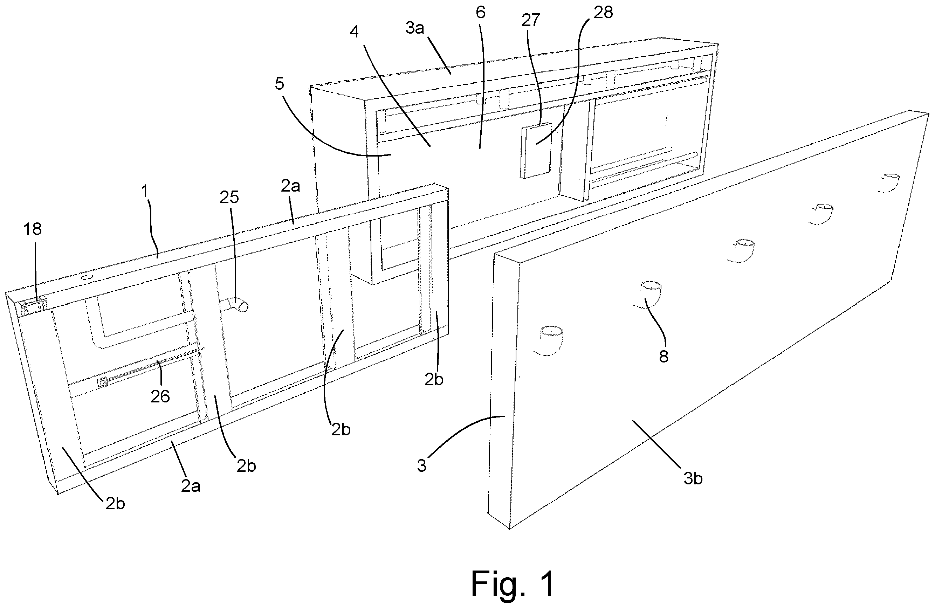

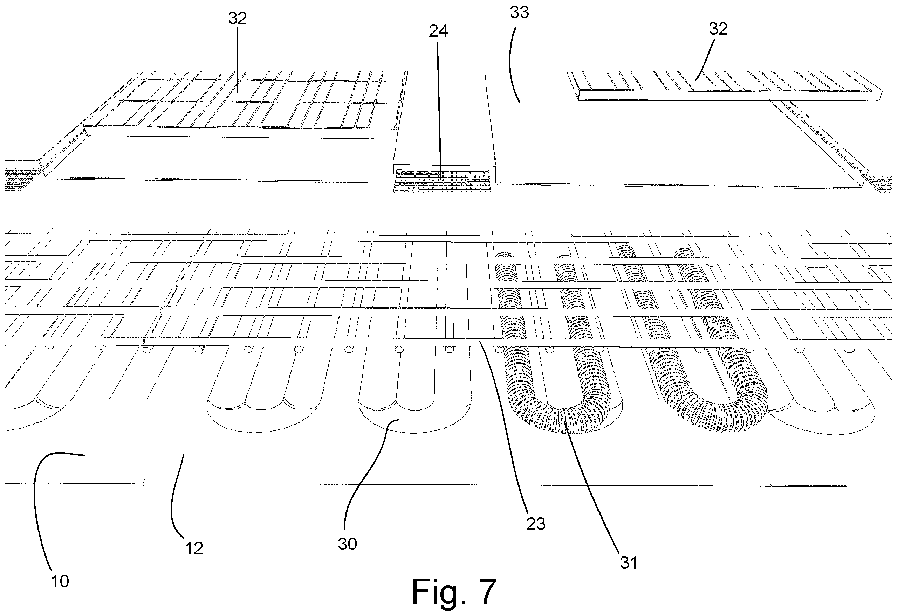

Figs 1 to 6 illustrate different steps of an embodiment of the method according to the invention for manufacturing a fire-proof and insulating prefabricated building wall according to the invention as illustrated in Figs 7 to 11.

Referring to Figs 1 to 4 a load-bearing reinforcement structure 1 with six reinforcing members in the form of two horizontal steel beams 2a and four vertical steel beams 2b, which may be welded together or otherwise attached to each other at relevant positions, is positioned into an expansion mould 3 in two parts 3a and 3b with a mould wall 4 comprising interior mould surfaces 5 enclosing a plate shaped volume 6.

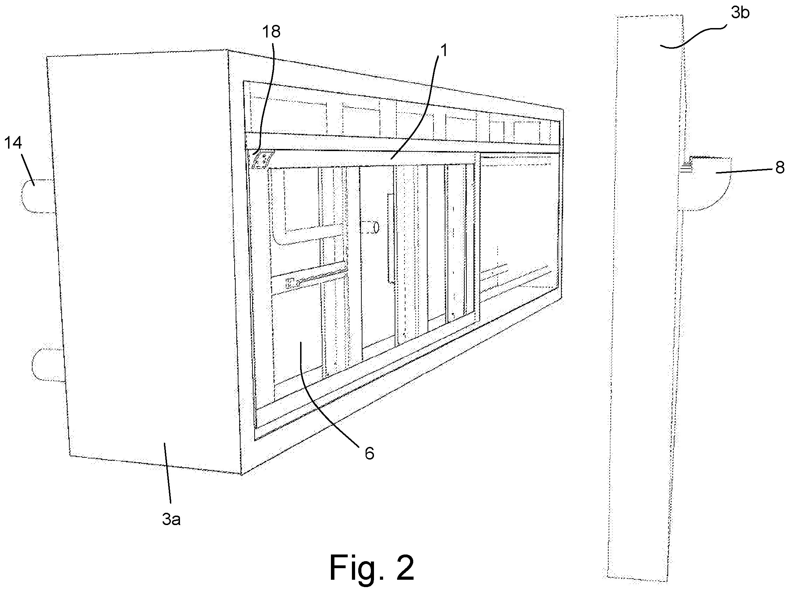

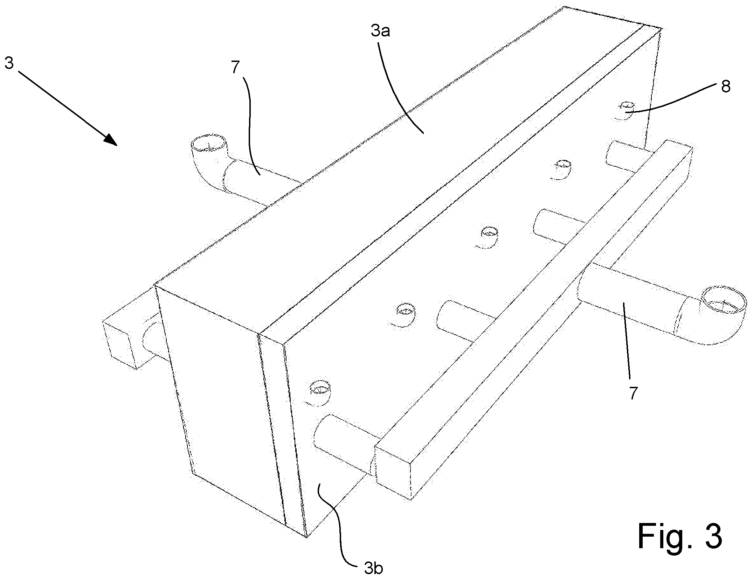

In Fig. 1 the expansion mould 3 is shown in an open position ready for receiving the reinforcement structure 1. In Fig. 2 the reinforcement structure 1 is positioned inside the expansion mould 3. In Fig. 3 the expansion mould 3 is shown in the closed position in which the two mould parts 3a and 3b are put together to form the volume 6 in which the reinforcement structure 1 is positioned. In the position of Fig. 3 beads of an insulating expandable plastic material (not shown) are blown into the expansion mould 3 via channels 7 and are expanded inside the volume 6 using heated steam that is also blown into the volume 6. The expanded plastic material consists essentially of EPS. Steam and gas can leave the volume 6 via channels 8. Inside the volume 6 the beads hereby melt together to form a foamed core plate 9 of a plate shape corresponding to the plate shape of the volume 6. The plate shape of the core plate 9 comprises plate surfaces including two major plate surfaces 10, 11. The beads ultimately expand to encase the reinforcement structure 1 so that the reinforcement structure 1 extends through and is embedded within the core plate 9 with substantially all surfaces of the reinforcement structure 1 that are positioned within the plate surfaces of the core plate 9 being in contact with the core plate 9. The reinforcement structure 1 and the foamed core plate 9 thereby together form a load-bearing, insulating wall core 12, which assumes the general plate shape of the core plate 9.

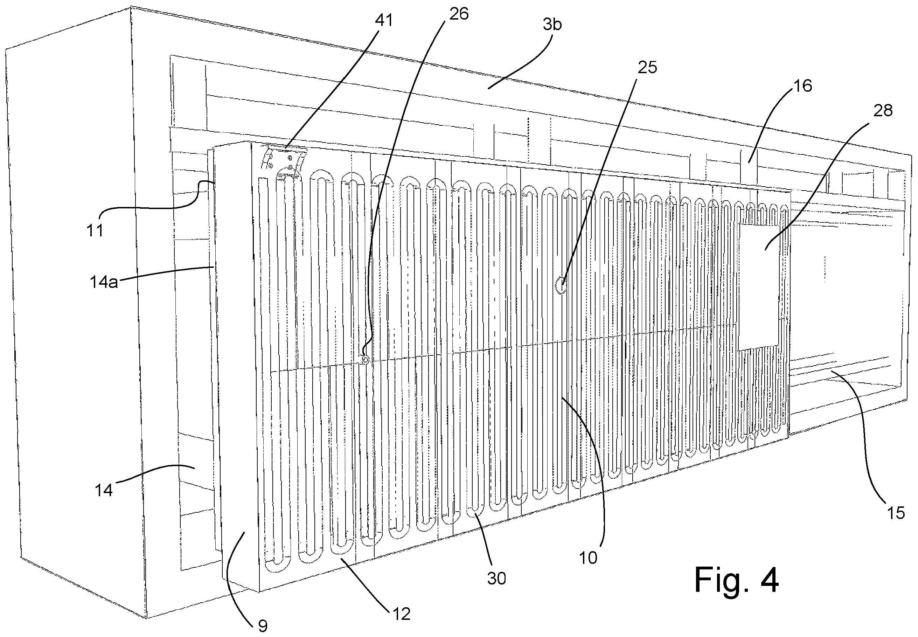

As is shown in Fig. 4 the wall core 12 is extracted from the expansion mould part 3a using members 14 that push a back part 14a of the mould surface 14 towards one major wall 11 of the wall core 12, the mould part 3b having been detracted to open the expansion mould 3. The members 14 as well as similar members 15 at a side part of the mould surface 14 and similar members 16 at a top part of the mould surface 14 can be used to adjust the three spatial dimensions of the plate shape of the volume 6 so that a large variance of sizes of the wall core 12 can be manufactured. The members 14, 15, 16 can be steel bars that are manually or automatically adjustable in their longitudinal directions.

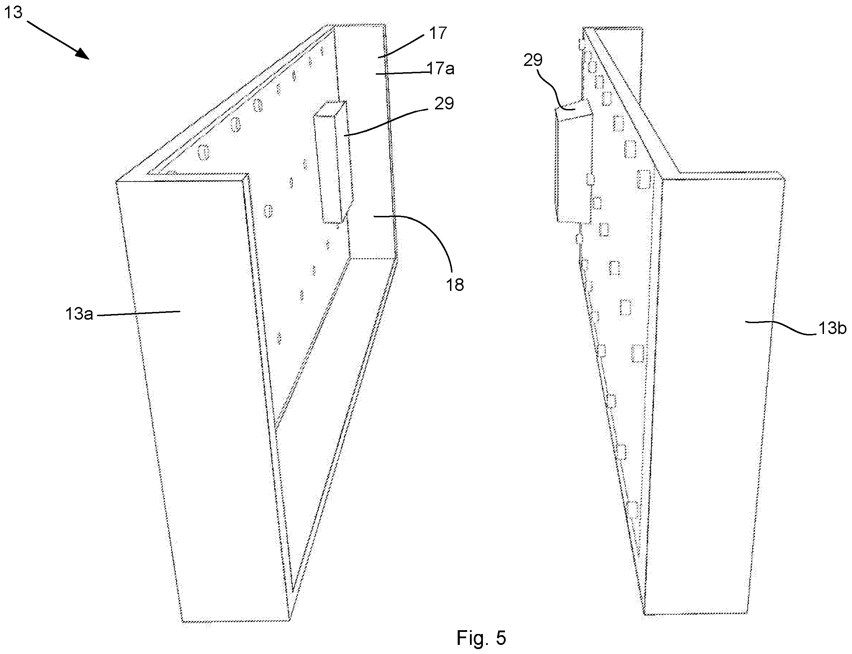

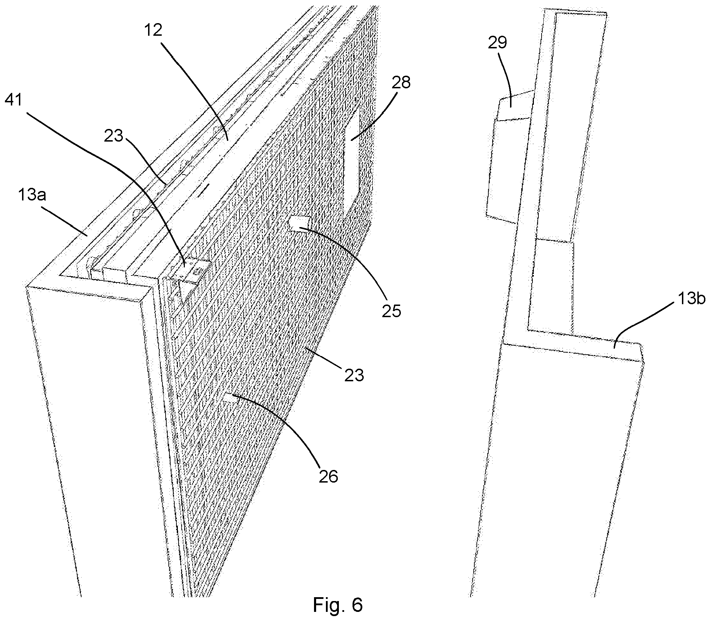

Fig. 5 shows a formwork mould 13 in two parts 13a, 13b. In Fig. 6 the wall core 12 has been inserted into the formwork mould part 13a, the mould's interior wall 17 encasing the wall core 12. Similar to the expansion mould 3 the mould wall 17 comprises interior mould surfaces 17a defining a plate shaped volume 18, all surfaces, including major surfaces 10, 11, of the wall core 12 being positioned at a distance from the mould wall 17. The size and shape of the formwork mould 13 is specifically designed to the building wall produced, but could be adjustable similar to the expansion mould 3 as described above.

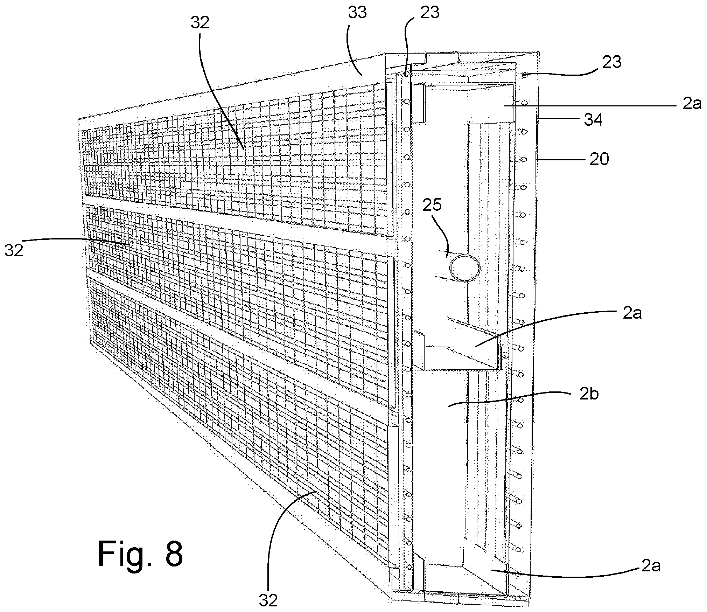

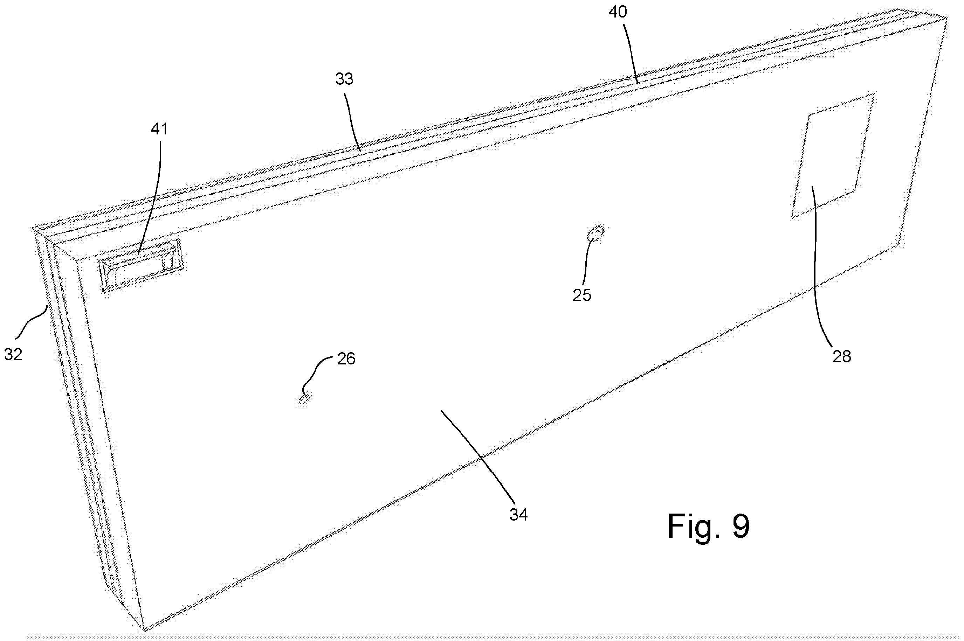

The formwork mould 13 is closed by putting together the two parts 13a, 13b after which a vacuum is applied to the volume 18. Then a fire-proof cementitious material is pumped into the formwork mould 13 from beneath and is allowed to extend between the mould wall 12 and all surfaces of the wall core 12. The cementitious material (not shown) then at least partly cures, the cementitious material adhering to all surfaces of the wall core 12 to produce a coating 40 (not shown in Figs 7 and 8, but shown in Figs 9, 10 and 11) of these surfaces with the cementitious material. The two major outer surfaces 40a, 40b of the coating 40 form the two major surfaces of the resultant building wall shown in Figs 7 to 11. The wall core 12 is standing upright, i.e. in a substantially vertically extending position, during moulding.

The building wall is thus manufactured in a factory consecutively in two moulds 3, 13. The building wall is removed from the formwork mould 13 and transported to a building site where it is lifted into position, e.g. using a crane. Thus a building with a fire-proof, insulating, load-bearing prefabricated building wall comprising a wall core with an insulating core is manufactured. Several similar building walls of differing sizes and shapes can be attached to each other using connecting or anchoring devices that may also be integrated in the plate-shaped building wall and extend outside the wall from the surfaces of the wall. One example, denoted 41, of such an anchoring device is shown best in Fig. 9. As is the case with the anchoring device 41, see Figs. 1 and 2, the anchoring devices are generally attached to the reinforcement structure 1, e.g. using bolts. Usually it is relevant to include an array of like devices in relevant positions at the exterior surfaces of the building wall.

The building wall can also be used as a horizontal or inclined "wall", e.g. roofing or flooring modules, in the building that similarly may be connected to each other and the outer walls of the building. The building wall may be used as outer walls forming part of the building's weather screen as well as interior walls.

The bars 2a, 2b usually are dimensioned to carry the load of the wall itself as well as other building parts. Thus, in the embodiment shown the bars 2a, 2b are U-beams, i.e. having a cross-sectional U-profile that allows the bars 2a, 2b to function as load-bearing columns in the static system of the building.

The two major surfaces 40a, 40b of the building wall may be painted. Wall panels 33, 34 are attached to the outer surface of the building wall at the factory. The cementitious fire-proof material comprises light-weight concrete.

Expansion of the plastic material can be accomplished using steam provided from a steam generator in the factory.

The major surfaces 40a, 40b of the building wall resulting from the method according to the invention may be painted at the factory or on the building site.

The wall core 12 is shaped substantially as a parallelepiped that is positioned with its major surfaces 10, 11 substantially perpendicular and horizontal during the injecting step in which concrete is injected or pumped into the formwork mould 13. Similarly, the resultant building wall is shaped as a parallelepiped. Accordingly, the interior volumes 6, 18 of the expansion mould 3 and the formwork mould 13 are each shaped as a parallelepiped. A lid plate (not shown) is positioned on top of the moulds 3, 13 in their closed positions to form the upper surface of the mould wall 17.

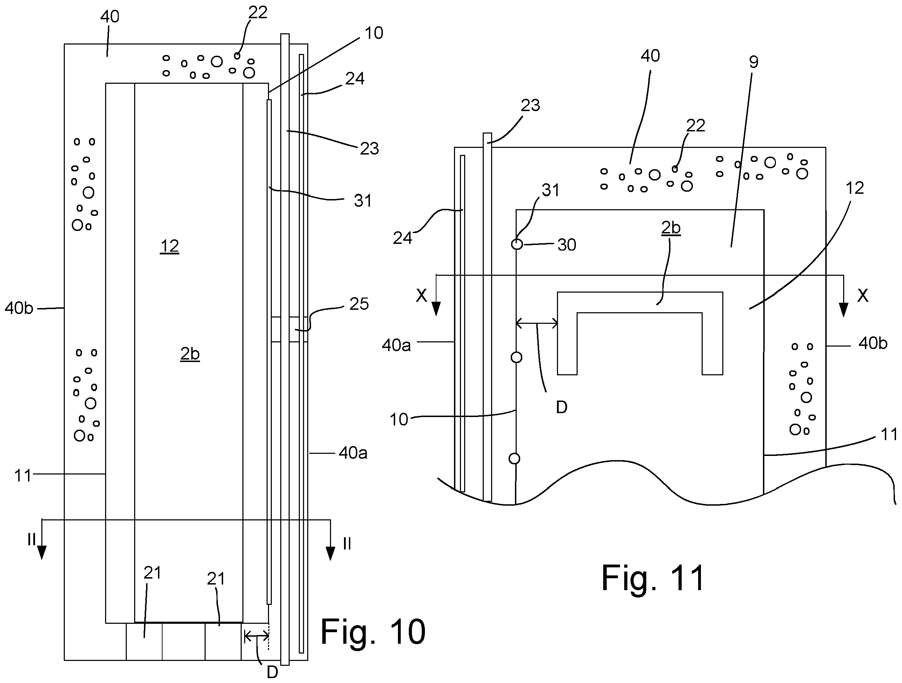

Coating of the bottom minor surface of the wall core 12 is achieved by positioning one or more spacer blocks 21 (Fig. 10) beneath the wall core 12 to space the wall core from a bottom mould surface of the formwork mould. The spacer blocks 21 are manufactured from light-weight concrete and are moulded into the coating 40 during the injection step.

Before the injection step the formwork mould 13 is filled with an insulating filler material in the form of LECA perlit beads 22 around the wall core 12 between which the cementitious material is distributed during the injection step so that the beads 22 are integrated into the coating 40. The resultant coating 40 is fire-proof.

Before filling the beads into the formwork mould 13 a steel wire mesh 23 is positioned in the formwork mould 13 between the wall core 12 and the mould wall 17 extending along the major surfaces of the wall core 12. The wire mesh 23 is positioned to be substantially co-planar with the major surfaces 40a, 40b and is positioned approximately half-way between the major surfaces 10, 40a and 11, 40b, respectively. The wire mesh 23 is then moulded into the coating 40 during the injection step, which provides improved structural integrity and flexural strength of the coating 40 so that the coating 40 is able to carry its own weight, but is otherwise not load-bearing.

An acrylic wire mesh 24 is also positioned close to the mould wall 17 at each of the major surfaces 10, 11 of the wall core 12 before the injection step so as to be integrated into the coating 40 during the injection step.

The method may be repeated to produce one or more further, similar building walls using the same equipment.

Previous to the blowing step a pipe 25 and a power cable 26 are positioned in the mould 13 to fit to desired positions in the resultant building wall, the pipe 25 and cable 26 being embedded in the wall core 12 during the expansion step. At the factory the pipe 25 and cable 26 are thus positioned in exact locations in the building wall, and cutting in the building wall at the building site is completely avoided. The plastic material within the surfaces of the wall core 12 are everywhere in contact with outer surfaces of the pipe 25 and cable 26 since the plastic material is expanded to enclose these. The pipe 25 and cable 26 at respective ends project out of the wall core and the building wall to allow for connection. Further cabling, conduits, piping plumbing etc. may be included depending on the needs.

Previous to the blowing step a frame 27 is also positioned within the expansion mould 3, the frame 27 extending between the two major surfaces of the mould wall. Hereby, a frame volume 28 enclosed within the frame 27 is during the blowing and expansion steps step kept free of the plastic material, the frame volume 28 forming a door or window aperture in the wall core 12 and the resultant building wall. The frame comprises four side surfaces that function as formwork for the side surfaces of the aperture. Hereby, in a cheap and easy manner a window aperture is also included in the wall core 12 without the need to cut out apertures in the wall core 12 after manufacture. Similarly, a like frame 29 is included in the formwork mould 13 in the same position to ensure that the coating 40 also does not extend to the window aperture.

The expansion mould 3 on a mould wall surface facing the major surface 10 of the wall core 12 comprises a projection (not shown) that extends coplanarly with the mould wall surface 10 so that the expanded wall core 12 on the major surface 10 thereby comprises an associated longitudinally extended groove 30 shaped by the longitudinally extending projection. The projection and thus the groove 30 weave back and forth across the surface as shown to provide a larger collecting area. Previous to the injecting step a flexible solar heating liquid pipe 31 is positioned in the groove 30 so that after the injecting step in the resultant building wall the liquid pipe 31 extends between the major surface 10 of the wall core 12 and the coating 40, a channel for the liquid pipe 31 being provided by oppositely disposed grooves in the wall core 12 and the coating 40, respectively. Hereby, at the factory the liquid pipe 31 can be readily included in the building wall close to the major surface 40a of the building wall and at the outer side of the insulating wall core 12. The liquid pipe 31 is thus able to collect and store heat energy from the coating 40 as previously explained.

Three solar cell panels 32, each comprising a number of solar cells, are positioned on the surface of the building wall on the outside of the major surface 40a of the building wall. Specifically, each panel 32 is positioned in suitable shaped depressions in a wall cover 33, which is attached to the surface of the coating 40 and extends to enclose the surface 40a. In a conventional manner the solar cell panels 32 produce power that via not shown conduits may be transferred from the panels 32. The liquid pipe 31 is thus positioned behind the solar cell panels 32 to provide cooling of a back side of the panels 32 using circulation of the liquid within the pipe 31. Inlet and outlet of the liquid pipe 31 are connected with a solar heating system (not shown).

A like wall panel 34 is positioned to enclose the opposite major surface 40b of the building wall.

The flexible liquid pipe 31 is attached in different places to the wall core 12 wall using temporary fastening means such as metal clips or the like that can be introduced into the wall core 12 and be integrated into the coating 40.

Referring to Figs 10 and 11 the core plate 9 extends between the reinforcement structure 1 and the coating 40 so that the core plate 9 at all positions distances the coating 40 from the reinforcement structure. The minimum distance D is shown in Figs 10 and 11 and is approximately 15 mm. This provides improved insulating properties of the building wall since thermal bridges are avoided. Note that the solar panels 32 and the wall covers 33, 34 are not shown in Figs 10 and 11.

## Claims

1. A method for manufacture of a fire-proof and insulating prefabricated building wall, comprising the steps of
positioning an interior load-bearing reinforcement structure (1) with a number of reinforcing members (2a, 2b) into an expansion mould (3) with a mould wall (4) comprising interior mould surfaces (5) enclosing a plate shaped volume (6),
blowing beads of an insulating expandable plastic material into the expansion mould (3),
expanding the beads in the expansion mould (3) and allowing them to melt together to form a foamed core plate (9) of a plate shape corresponding to the plate shape of said plate shaped volume (6), said plate shape of the core plate (9) comprising plate surfaces including two major plate surfaces (10, 11), the beads ultimately expanding to encase the reinforcement structure (1) so that the reinforcement structure (1) extends through and is embedded within the core plate (9) with substantially all surfaces of the reinforcement structure (1) that are positioned within said plate surfaces of the core plate (9) being in contact with the core plate (9), the reinforcement structure (1) and the foamed core plate (9) thereby together forming a load-bearing, insulating wall core (12), which assumes the general plate shape of the core plate (9),
positioning of the wall core (12) in a formwork mould (13) with a mould wall (17) encasing the wall core (12), the mould wall (17) comprising interior mould surfaces (17a) forming a plate shaped volume (18), at least one of the major surfaces (10, 11) of the wall core (12) being positioned at a distance from the mould wall (17),
injecting a fire-proof cementitious material into the formwork mould (13) and allowing it to extend at least between the mould wall (17) and said one major surface (10, 11) of the wall core (12), and
allowing the cementitious material to at least partly cure, the cementitious material adhering to said one major surface (10, 11) to thereby provide coating of the one said major surface (10, 11) of the wall core (12) with the cementitious material to form a coating having an outer surface forming a first major surface of the building wall.

2. A method according to claim 1, comprising previous to the blowing step the further step of positioning piping, channels and/or cabling in the expansion mould to fit to desired positions in the resultant building wall, the piping, channels and/or cabling being embedded in the wall core during the expansion step.

3. A method according to claim 1 or 2, further comprising previous to the blowing step the further step of positioning of a frame within the expansion mould, the frame extending between two parts of the mould wall, a frame volume enclosed within the frame being kept free of the plastic material during the blowing and expansion steps, said frame volume forming a door or window aperture in the wall core and the resultant building wall.

4. A method according to any one of claims 1 to 3, wherein the expansion mould on a mould wall surface facing said one major surface of the wall core comprises at least one longitudinally extending projection that extends coplanarly with the mould wall surface so that the expanded wall core on said major surface thereby comprises an associated longitudinally extended groove shaped by the longitudinally extending projection, and previous to the injecting step further comprising the step of
positioning at least one solar heating liquid pipe in the groove so that after the injecting step in the resultant building wall the liquid pipe extends between said one of the major surfaces of the wall core and the coating, a channel for the liquid pipe being provided by oppositely disposed grooves in the wall core and the coating, respectively, and preferably the step of
positioning on an outside of said one of the major surfaces at least one solar cell panel.

5. A method according to any one of the previous claims, wherein the injection step also comprises similar coating of the other of said major surfaces of the wall core with the cementitious, fire-proof material forming an outer surface with a second outer surface of the building wall.

6. A method according to any one of the previous claims, wherein the expanded plastic material essentially consists of polystyrene or polyurethane.

7. A method according to any one of the previous claims, wherein the wall core extends between the reinforcement structure and the coating so that the wall core at substantially all positions distances the coating from the reinforcement structure with at least 5 mm.

8. A fire-proof and insulating prefabricated building wall manufactured according to the method of any one of the previous claims.

9. A fire-proof and insulating prefabricated building wall according to claim 8, comprising a solar heating liquid pipe being positioned in a channel extending between the wall core and the coating.

10. A building comprising a building wall according to claim 9, wherein the reinforcing members comprise bars extending longitudinally from one end to another in a direction extending substantially in a plane of the plate-shaped building wall with load-bearing properties sufficient to allow the building wall to carry both its own weight and a substantial part of the load of a roof construction above the building walls, the bars having a cross-sectional profile that allows the bars to function as load-bearing columns in a static system of the building.

## Patentansprüche

1. Verfahren zur Herstellung einer feuerfesten und isolierenden Fertigteilgebäudewand, die folgenden Schritte umfassend:
Positionieren einer inneren lasttragenden Verstärkungsstruktur (1) mit mehreren Verstärkungselementen (2a, 2b) in einer Ausdehnungsform (3), wobei eine Formwand (4) innere Formflächen (5) umfasst, die einen plattenförmigen Raum (6) umschließen,
Einblasen von Perlen aus isolierendem, ausdehnbarem Kunststoffmaterial in eine Ausdehnungsform (3),
Ausdehnen der Perlen in der Ausdehnungsform (3) und Zulassen, dass diese zusammenschmelzen, um eine Schaumkernplatte (9) mit einer Plattenform, die zur Plattenform des plattenförmigen Raums (6) passt, auszubilden, wobei die Plattenform der Kernplatte (9) Plattenflächen umfasst, die zwei Hauptplattenflächen (10, 11) aufweisen, wobei sich die Perlen schlussendlich ausdehnen, um die Verstärkungsstruktur (1) zu umhüllen, sodass sich die Verstärkungsstruktur (1) durch die Kernplatte (9) erstreckt und darin eingebettet ist, wobei im Wesentlichen alle Flächen der Verstärkungsstruktur (1), die in den Plattenflächen der Kernplatte (9) positioniert sind, die Kernplatte (9) berühren, wobei die Verstärkungsstruktur (1) und die Schaumkernplatte (9) dadurch zusammen einen lasttragenden, isolierenden Wandkern (12) ausbilden, der die allgemeine Plattenform der Kernplatte (9) annimmt, Positionieren des Wandkerns (12) in einer Schalungsform (13),
wobei eine Formwand (17) den Wandkern (12) umhüllt, wobei die Formwand (17) innere Formflächen (17a) umfasst, die einen plattenförmigen Raum (18) ausbilden, wobei mindestens eine der Hauptflächen (10, 11) des Wandkerns (12) von der Formwand (17) beabstandet positioniert ist,
Einspritzen eines feuerfesten zementartigen Materials in die Schalungsform (13) und Zulassen, dass es sich zumindest zwischen der Formwand (17) und der einen Hauptfläche (10, 11) des Wandkerns (12) erstreckt, und
Zulassen, dass das zementartige Material zumindest teilweise aushärtet, wobei das zementartige Material an der einen Hauptfläche (10, 11) haftet, um dadurch eine Beschichtung der einen Hauptfläche (10, 11) des Wandkerns (12) vorzusehen, wobei das zementartige Material eine Beschichtung ausbildet, die eine Außenfläche aufweist, die eine erste Hauptfläche der Gebäudewand ausbildet.

2. Verfahren nach Anspruch 1, vor dem Einblasschritt den weiteren Schritt des Positionierens von Rohren, Kanälen und/oder Kabeln in der Ausdehnungsform, um an erwünschten Positionen in der resultierenden Gebäudewand zu liegen, umfassend, wobei die Rohe, Kanäle und/oder Kabel während des Ausdehnungsschritts in den Wandkern eingebettet werden.

3. Verfahren nach Anspruch 1 oder 2, ferner vor dem Einblasschritt den weiteren Schritt des Positionierens eines Rahmens in der Ausdehnungsform umfassend, wobei sich der Rahmen zwischen zwei Teilen der Formwand erstreckt, wobei ein in dem Rahmen eingeschlossener Rahmenraum während des Einblas- und Ausdehnungsschritts frei von Kunststoffmaterial gehalten wird, wobei der Raum eine Tür-oder Fensteröffnung im Wandkern und der resultierenden Gebäudeband ausbildet.

4. Verfahren nach einem der Ansprüche 1 bis 3, wobei die Ausdehnungsform auf einer Formwandfläche, die der einen Hauptfläche des Wandkerns zugewandt ist, mindestens einen sich in Längsrichtung erstreckenden Vorsprung umfasst, der sich komplanar mit der Formwandfläche erstreckt, sodass der ausgedehnte Wandkern auf der Hauptfläche dadurch eine zugehörige in Längsrichtung verlaufende Nut umfasst, die durch den sich in Längsrichtung erstreckenden Vorsprung ausgebildet wird, und vor dem Einspritzschritt ferner den Schritt des Positionierens mindestens eines Solarheizflüssigkeitsrohrs in der Nut umfassend, sodass sich nach dem Einspritzschritt in der resultierenden Gebäudewand das Flüssigkeitsrohr zwischen der einen der Hauptflächen des Wandkerns und der Beschichtung erstreckt, wobei ein Kanal für das Flüssigkeitsrohr durch entgegengesetzt angeordnete Nuten im Wandkern bzw. in der Beschichtung vorgesehen ist, und vorzugsweise den Schritt des Positionierens mindestens eines Solarzellenpaneels auf einer Außenseite der einen der Hauptflächen umfassend.

5. Verfahren nach einem der vorstehenden Ansprüche, wobei der Einspritzschritt außerdem eine ähnliche Beschichtung der anderen der Hauptflächen des Wandkerns umfasst, wobei das zementartige, feuerfeste Material eine Außenfläche mit einer zweiten Außenfläche der Gebäudewand ausbildet.

6. Verfahren nach einem der vorstehenden Ansprüche, wobei das ausgedehnte Kunststoffmaterial im Wesentlichen aus Polystyrol oder Polyurethan besteht.

7. Verfahren nach einem der vorstehenden Ansprüche, wobei sich der Wandkern zwischen der Verstärkungsstruktur und der Beschichtung erstreckt, sodass der Wandkern an im Wesentlichen allen Positionen die Beschichtung von der Verstärkungsstruktur um mindestens 5 mm beabstandet.

8. Feuerfeste und isolierende Fertigteilgebäudewand, die gemäß dem Verfahren nach einem der vorstehenden Ansprüche hergestellt wird.

9. Feuerfeste und isolierende Fertigteilgebäudewand nach Anspruch 8, die ein Solarheizflüssigkeitsrohr umfasst, das in einem Kanal positioniert ist, der sich zwischen dem Wandkern und der Beschichtung erstreckt.

10. Gebäude, eine Gebäudewand nach Anspruch 9 umfassend, wobei die Verstärkungselemente Stäbe umfassen, die sich in Längsrichtung von einem Ende zum anderen in eine Richtung im Wesentlichen in einer Ebene der plattenförmigen Gebäudewand erstrecken, die lasttragende Eigenschaften aufweisen, die ausreichen, um zuzulassen, dass die Gebäudewand sowohl ihr eigenes Gewicht als auch einen wesentlichen Teil der Last einer Dachkonstruktion über den Gebäudewänden trägt, wobei die Stäbe ein Querschnittsprofil aufweisen, das zulässt, dass die Stäbe als lasttragende Säulen in einem Statiksystem des Gebäudes wirken.

## Revendications

1. Procédé de fabrication d'un mur de bâtiment préfabriqué, résistant au feu et isolant, comprenant les étapes consistant à
placer une structure de renforcement porteuse intérieure (1) comportant un certain nombre d'éléments de renforcement (2a, 2b) dans un moule de moulage par expansion (3) ayant une paroi de moule (4) comprenant des surfaces intérieures de moule (5) délimitant un volume en forme de plaque (6),
introduire des billes d'une matière plastique expansible isolante dans le moule de moulage par expansion (3),
provoquer l'expansion des billes dans le moule de moulage par expansion (3) et les laisser fondre les unes avec les autres pour former une plaque d'âme expansée (9) présentant une forme de plaque correspondant à la forme de plaque dudit volume en forme de plaque (6), ladite forme de plaque de la plaque d'âme (9) comprenant des surfaces de plaque comprenant deux surfaces de plaque principales (10, 11), les billes, par leur expansion, finissant par envelopper la structure de renforcement (1) de telle sorte que la structure de renforcement (1) s'étend à travers la plaque d'âme (9) et est noyée à l'intérieur de celle-ci, essentiellement toutes les surfaces de la structure de renforcement (1) qui sont situées à l'intérieur desdites surfaces de plaque de la plaque d'âme (9) étant en contact avec la plaque d'âme (9), la structure de renforcement (1) et la plaque d'âme expansée (9) formant ainsi ensemble une âme de mur isolante porteuse (12), qui prend la forme de plaque globale de la plaque d'âme (9),
placer l'âme de mur (12) dans un moule de coffrage (13) comportant une paroi de moule (17) entourant l'âme de mur (12), la paroi de moule (17) comprenant des surfaces intérieures de moule (17a) formant un volume en forme de plaque (18), au moins une des surfaces principales (10, 11) de l'âme de mur (12) étant située à une certaine distance de la paroi de moule (17),
injecter un matériau cimentaire résistant au feu dans le moule de coffrage (13) et le laisser s'étendre au moins entre la paroi de moule (17) et ladite surface principale (10, 11) de l'âme de mur (12), et
laisser le matériau cimentaire durcir au moins partiellement, le matériau cimentaire adhérant à ladite surface principale (10, 11) de façon à ce que ladite surface principale (10, 11) de l'âme de mur (12) soit revêtue avec le matériau cimentaire afin de former un revêtement ayant une surface extérieure formant une première surface principale du mur de bâtiment.

2. Procédé selon la revendication 1, comprenant, avant l'étape d'introduction, l'étape supplémentaire consistant à placer des canalisations, des conduits et/ou des câbles dans le moule de moulage par expansion conformément à des positions souhaitées dans le mur de bâtiment résultant, les canalisations, conduits et/ou câbles étant noyés dans l'âme de mur lors de l'étape d'expansion.

3. Procédé selon la revendication 1 ou 2, comprenant en outre, avant l'étape d'introduction, l'étape supplémentaire consistant à placer un cadre à l'intérieur du moule de moulage par expansion, le cadre s'étendant entre deux parties de la paroi de moule, un volume de cadre délimité par le cadre étant maintenu exempt de la matière plastique lors des étapes d'introduction et d'expansion, ledit volume de cadre formant une ouverture de porte ou de fenêtre dans l'âme de mur et le mur de bâtiment résultant.

4. Procédé selon l'une quelconque des revendications 1 à 3, dans lequel le moule de moulage par expansion sur une surface de paroi de moule faisant face à ladite surface principale de l'âme de mur comprend au moins une saillie à étendue longitudinale qui s'étend dans le même plan que la surface de paroi de moule de telle sorte que l'âme de mur expansée sur ladite surface principale comprenne ainsi une rainure à étendue longitudinale associée façonnée par la saillie à étendue longitudinale et, avant l'étape d'injection, comprenant en outre l'étape consistant à
placer au moins une canalisation à liquide de chauffage solaire dans la rainure de telle sorte que, après l'étape d'injection, la canalisation à liquide s'étende dans le mur de bâtiment résultant entre ladite surface principale de l'âme de mur et le revêtement, un conduit pour la canalisation à liquide étant formé par des rainures respectivement disposées en regard dans l'âme de mur et le revêtement et, de préférence, l'étape consistant à
placer sur une partie extérieure de ladite surface principale au moins un panneau de cellules solaires.

5. Procédé selon l'une quelconque des revendications précédentes, dans lequel l'étape d'injection comprend également le revêtement de façon similaire de l'autre desdites surfaces principales de l'âme de mur avec le matériau cimentaire résistant au feu formant une surface extérieure avec une seconde surface extérieure du mur de bâtiment.

6. Procédé selon l'une quelconque des revendications précédentes, dans lequel la matière plastique expansée est essentiellement constituée de polystyrène ou de polyuréthane.

7. Procédé selon l'une quelconque des revendications précédentes, dans lequel l'âme de mur s'étend entre la structure de renforcement et le revêtement de telle sorte que l'âme de mur sépare essentiellement en tout point le revêtement de la structure de renforcement d'au moins 5 mm.

8. Mur de bâtiment préfabriqué, résistant au feu et isolant fabriqué conformément au procédé selon l'une quelconque des revendications précédentes.

9. Mur de bâtiment préfabriqué, résistant au feu et isolant selon la revendication 8, comprenant une canalisation à liquide de chauffage solaire placée dans un conduit s'étendant entre l'âme de mur et le revêtement.

10. Bâtiment comprenant un mur de bâtiment selon la revendication 9, dans lequel les éléments de renforcement comprennent des barres s'étendant longitudinalement d'une extrémité à l'autre dans une direction s'étendant essentiellement dans un plan du mur de bâtiment en forme de plaque présentant des propriétés de support de charge suffisantes pour permettre au mur de bâtiment de porter son propre poids et une partie substantielle de la charge d'une construction de toit au-dessus des murs de bâtiment, les barres présentant un profil en section transversale qui permet aux barres de faire office de colonnes porteuses dans un système statique du bâtiment.
